# EUROPEAN PATENT APPLICATION

(11) **EP 1 280 098 A1**
(43) Date of publication of application: **29.01.2003**
(21) Application number: 01306105.6
(22) Date of filing: 16.07.2001
(51) Int. Cl.: G06K 11/18

(54) **Electronic signing of documents**

(71) Applicant: Trustcopy Pte Ltd, Singapore 119631 (SG)
(72) Inventor: Wu, Jian Kang, Singapore 600051 (SG); Zheng, Lei, Singapore 119000 (SG)
(74) Representative: Tomlinson, Kerry John

(57) **Abstract**

A method for a person to sign a hard copy or digital document by use of a signature sensing device, including the steps of capturing a capturable signature of the person; verifying the person's identity; generating a verification ID; then attaching the signature, the verification ID and an optical watermark to the document to complete the document signing process. Also disclosed is a method for generating a validated signature to a document including the steps of signing the document using a sensing device; creating a digest of the document; encrypting the hand signature within the sensing device; generating a verification ID; incorporating the verification ID into the document; and integrating the digest into the document.

## Description

### Field of the Invention

This invention relates to a method and system for the electronic signing of documents and refers particularly, though not exclusively, to such a method and system for protecting the integrity and originality of signed documents.

### Definitions

The method and system may use a hand signature as well as other "capturable" signatures such as, for example, digital certificate, voice, seal, fingerprint, face, iris, and so forth. For example, one can use a smart card to store a seal image, and use it to sign documents. The seal may be protected against forgeries by using an optical watermark. Another example is to use the voice of the signatory to sign documents. The voice may be recorded as a "signature" using digital recording techniques. Throughout this specification "hand signature" is to be taken as including all such capturable signatures.

Accordingly, the signing device can extend from an electronic pen to other sensing devices such as, for example, digital cameras, microphones, scanners, and so forth. Throughout this specification reference to "e-pen" or "electronic pen" is to be taken as including all such forms of sensing devices.

The "document" in this specification includes business documents and administrative documents, letters, and documents in other forms such as voice documents, image documents, software documents, bills, cheques/checks, tickets, treaties, scanned or otherwise recorded images, and so forth, whether in hard copy or digital form. Throughout this specification, a reference to a document is to be taken as including all such documents.

Throughout this specification, a reference to a computer is to be taken as including computers such as, for example, a desktop computer, personal computer, laptop computer, and notebook computer.

Throughout this specification reference to an optical watermark is to be taken as a reference to a watermark in accordance with our earlier international patent application PCT/SG00/00147 filed 15^{th} September 2000, a copy of which is filed herewith.

### Background to the Invention

To be reliable, a signature system should provide non-repudiation, and verifiable evidence, that a person has correctly signed the required document at a particular time. It is a difficult task to verify the identity of a person who has signed a document as attacks on the integrity of the signing process may happen at any time during the signing process: from forging the signature, to combining a correct signature with an irrelevant document. When a document is signed, a party with fraudulent intent may record the signal generated at the signing using sensors and then use the recorded signal to create a forged signature. Attackers may also obtain a sample of a real, hand-applied signature, and manually imitate it. When transferring signatures, a fraudulent party may cut or copy signature data from a document and attach it to an irrelevant document. A receiver can also forge a printed document by forging the signature of the correct party on that document.

This invention has as its objective an electronic signing method and system that protects the authenticity and integrity of the document with a capturable identifier such as, for example, the normal hand signature and/or a digital signature. Preferably, it can be used in both electronic and hard copy forms.

### Consideration of the Prior Art

US patent 5,517,579 describes a handwriting recognition apparatus including handwriting input apparatus employing at least two different sensing techniques to sense handwriting, and symbol identification apparatus receiving an output of the handwriting input apparatus for providing an output indication of symbols represented by the handwriting. However, although the additional sensors provide more information for the verification process, it cannot differentiate between signals resulting from real signatures and recorded signals of a signature. A fraudulent party could record the signals from the sensor and then replay the recorded signature to create a forged signature.

International patent application WO/0049583 relates to a method and device for personalizing and verifying identification and security documents, and to a security document that can be used therewith. The identification or security document contains data specific to the individual in alphanumeric and/or graphical form, which is either printed on the document and/or stored in the document. The data specific to the individual and/or correlated data is also present in/on the document in a second form that can be machine-read. This data, and the data specific to the individual, can be read from the document and checked for consistency, using an appropriate test control unit. However, the specification does not disclose a mechanism to securely protect the integrity of the content of the document, nor does it disclose a method for user authentication.

International patent application WO/0031677 discloses a method for the authorization of documents that includes preparing a record for future reference by authorized personnel, including providing a sensitive document, collecting biometric data from an individual requesting authority to become an authorized person to access the document, forming a bar code including the biometric data from the individual, attaching the bar code to the document, and storing the document and attached bar code. Access to the document is authorized by collecting current biometric data from a person requesting access, comparing the current biometric data to the bar code attached to the document, and confirming that the person requesting access and the authorized individual are identical. Again, it fails to protect the integrity of the personal identification with the specified document; cannot discern signals corresponding to a real signature from recorded signals; and it needs a bar code reader to verify the encoded data.

International patent application WO/0007330 is for the use of a digital signature for providing non-repudiation by using biological indicia. A digital certificate is formed in a secure processor from a digitized representation of a unique biological feature of a registrant. The digital representation is signed with the registrant's private encryption key in the secure processor, and transmitted to a certificate authority through a communication network. The registrant's identity is verified at a remote, secure registration processor. After identity verification, the certificate authority forms the certificate by encrypting the digital signature with the certificate authority's own encrypting key during the registration process. The certificate is also held in a publicly available directory. The document and the certificate are then transmitted to a receiving terminal. If the sending party denies sending the document, the biological feature can be extracted from the certificate and directly compared with the actual biological feature of the sending party during the validation process. This is an extension of the use of existing digital certificates with biometrics data, and does not deal with documents.

US patent 5,867,802 is for a "biometrically secured control system for preventing the unauthorized use of a vehicle". It relates to authentication of a valid owner/driver of a vehicle. It stores the owner/driver's fingerprints in a memory in the vehicle's control system. A microprocessor has the primary task of executing instructions relating to the operation of the vehicle. Before the microprocessor can execute its instructions relating to its primary task, it must complete and exit a conditional loop of instructions that relate to validating a user's "real-input" biometric data. This is fingerprint access control for vehicles.

US patent 5,721,781 is for a portable information device, such as a smart card. The smart card is assigned its own digital certificate that contains a digital signature from a trusted certifying authority, and a unique public key. Each of the applications stored on the smart card is also assigned an associated certificate having the digital signature of the certifying authority. The system further includes a secure processor that is capable of accessing the smart card. The secure processor is assigned its own certificate, which also contains the digital signature from the trusted certifying authority, and a unique key. During a transactional session, the smart card and the secure processor exchange their certificates to authenticate one another as well as the applications. Additionally, the cardholder enters a unique PIN to authenticate the cardholder. This is a three-tiered authentication system: card, application, and cardholder, not a solution for the signing and/or authenticating a document.

All the known prior art are susceptible to a "record and replay" attack, as they do not protect the integrity of the signature with its document at the time the signature is applied to the document. Furthermore, most rely on online verification processes, which are obscure to the end user, and vulnerable to attack from within the network.

### Summary of the Invention

The present invention therefore provides a method for a person to sign a document by use of an electronic pen, including capturing a hand signature of the person, generating a verification ID, then attaching the hand signature and the verification ID and an optical watermark to the document to complete the document signing process.

Preferably, the identity of the person is verified before generating the verification ID, the verification ID being the hand signature and/or a document digest and/or a time stamp and/or representative features of the document. The hand signature may be embedded into the optical watermark, and the document digest and/or a time stamp, may be embedded into the optical watermark to form a link between the document and the hand signature. Furthermore, the document digest may be critical information of the document.

The person's identity may be verified by a public key infrastructure after a security handshaking challenge-and-response session between a server and the electronic pen, and the electronic pen may store an identity number of the electronic pen, a private key of the electronic pen, a private key of the person, measured features of the person's hand signature, and/or a detachable learning module. If a plurality of persons are able to use the electronic pen, the electronic pen should be able to store registration information of each such person.

The server and electronic pen can store their respective private keys, and the hand signature and/or measured features of the hand signature of the person are stored in the server. Security handshaking between the server and the electronic-pen based on public key pairs is a preferred step. The hand signature and/or measured features of the hand signature of the person may be stored in the electronic-pen, and the processing and verification of the hand signature can also carried-out inside the electronic-pen. There is preferably a security authentication process between the server and the electronic-pen, as well as between the server and a computer. After successful completion of the security handshaking, the electronic-pen collects hand signature data, encrypts the hand signature data, and sends it to the server for further processing and verification.

The capturing and processing of the hand signature and/or measured features of the hand signature of the person may be carried out in a secure processor and the processing result sent to the electronic pen for verification. The private key and the hand signature of the person can be stored in the electronic pen, the hand signature and/or the measured features of the hand signature of the person stored in the secure processor, and the hand signature and/or the measured features of the hand signature stored in the computer. The hand signature and/or the measured features of the hand signature of the person may be stored in an encrypted form, preferably in a secure memory. The secure memory may be an authentication card for the person.

There may be included a document-handling module in the terminal for displaying the document and incorporating the hand signature into the document. There may also be a seal image stored in the electronic pen so that upon signing the document both the hand signature of the person and the seal image will appear on the document. The seal image may be an optical watermark in which is embedded hidden information to protect against forgeries.

The method may be applied to process approval.

In an alternative form, the present invention provides a method for generating a validated hand signature to a document by signing the document using an electronic pen, creating a digest of the document, encrypting the hand signature within the electronic pen, generating a verification ID, incorporating the verification ID into the document, and integrating the digest into the document.

The verification ID may be generated from the captured hand signature, the document digest, a time stamp, and/or representative features of the document. The hand signature may be embedded into an optical watermark, and at least one of the document digest, critical features of the document, a time stamp, and the document contents, are embedded into the optical watermark to form a link between the document and the hand signature.

The document can be authenticated by creating a digest of the signed document, generating a decrypt key using the document digest and using it to decrypt the verification ID, comparing the hand signature extracted from the verification ID and the hand signature as it appears on the signed document, comparing the digest generated from the document and the digest from the verification ID, comparing the hand signature on the document with that embedded in the optical watermark, and comparing that of the critical features/content of the document and/or the time stamp embedded in the optical watermark with its equivalent in the document.

The digest of the document may be obtained from the representative features of the document, and that which is embedded in the optical watermark can be decoded by a special key.

When the document is a printed document, the hand signature and the digest of the document may be extracted from the printed document, and the document authenticity verified by comparing the hand signature on the document with the hand signature embedded in the optical watermark. The critical features/content of the document and the time stamp embedded in the optical watermark can then be compared with their equivalents in the document.

The hand signature and the time stamp may be encrypted using an encryption key generated from the digest of the document, and the digest of the document used to obtain an encryption key pair from a database of encryption key pairs. Alternatively, the document digest may be used to generate an encryption key pair using a secret function. The database and/or the secret function are located in the electronic pen, the server, or the secure memory.

The hand signature may include signature image and features of the hand signature, the features of the hand signature including pressure and speed. Pre-registered hand signatures may be stored for future use in the electronic pen, the server, and the secure memory. Preferably, the pre-registered hand signatures are periodically updated, and any the hand signature may be combined with other biometric information of the person.

Encryption may be by public key pair and/or symmetry key.

### Description of the Drawings:

In order that the invention may be readily understood and put into practical effect, there shall now be described by way of non-limitative example only preferred embodiments of the present invention, the description being with reference to the accompanying illustrative drawings in which:
Figure 1 is a representation of a typical document signing system according to the present invention;
Figure 2 is a block-diagram of one form of an e-pen for use with the present invention;
Figure 3 is a block diagram of one form of a secure processor for use with the present invention;

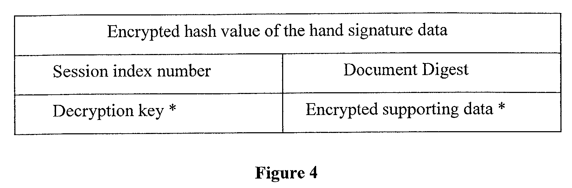

Figure 4 is an illustration of the verification ID;

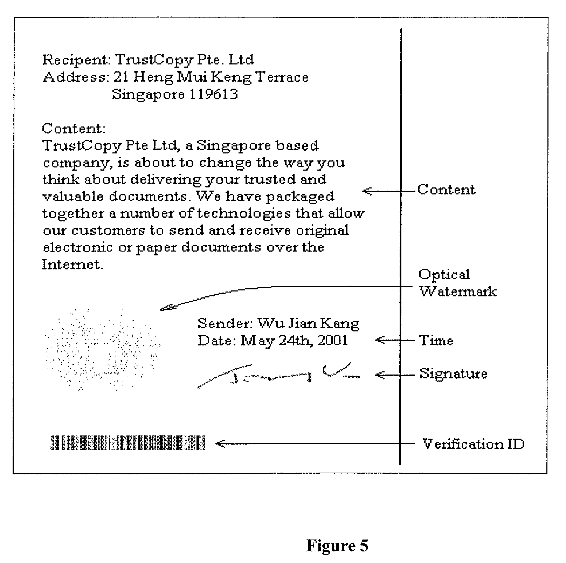

Figure 5 is an example of a signed document; and
Figure 6 is a flow chart of the signing process.

### Description of Preferred Embodiment

The signed document of the present invention, has the following structure:
- content of the document;
- hand signature data;
- verification ID, which may consist of the following items, and which may be encrypted:
   o hand signature and/or its critical features and/or its digest;
   o digest of the document content (either hash, features, or critical items);
   o time stamp; and
- a watermark, including an optical watermark, with embedded hand signature and critical items of the document content.

The major steps in the signing process are:
- authentication of the signer, through a hand signature as is defined at the start of this specification;
- capturing the hand signature, and generating a verification ID for the signed document; and
- watermark generation.

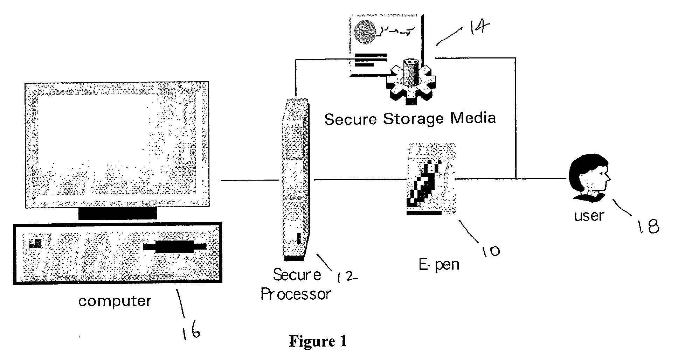

As shown in Figure 1, in one form of the present invention there is an e-pen 10, a secure processor 12, a secure storage 14, a computer 16, and a user 18. These are to:
1. capture the hand signature of the user 18;
2. add a time stamp;
3. compute a digest or representative features of the target document; then
4. generate a verification ID of the signed document with the user's:
   (a) hand signature, digest, and/or other features of the document using security algorithms; and
   (b) a time stamp using security algorithms; and
5. generate a watermark with embedded signature and critical information relating to the document.

Furthermore, the method and system may also include:
- a device or program to print the document with the signature and the optical watermark for the authentication of the printed document;
- a device or program that provides the infrastructure for the management of documents with respect to processing, transfer, approval, security and authenticity; and
- a protocol to verify the authenticity and legitimacy of documents, either off-line or online.

There are a variety of possible configurations for the document signing system. For example, the e-pen can be as simple as a pointing device; and as complicated as an electronic pen to capture signatures, with a secure storage and a secure processor. As such, security handshaking and hand signature verification between the e-pen, the secure storage, the secure processor and the computer, may have a number of protocols. In each case, it is assumed that the secure processor is secure; the e-pen device is secure; and the private key of the e-pen user is stored in the e-pen. The hand signature, or its features, may be stored in the server. Examples of suitable protocols are:
**Protocol 1:** In this protocol, there is no independent secure memory. Both the secure processor and e-pen can store their private key in their own secure memory, and each knows the public key of the other. The hand signature and/or features of the hand signature of the e-pen user are stored in the secure processor in a secure database, together with the e-pen user's name and/or other identifying data. The signing procedure commences with a security handshake between the secure processor and the e-pen, via a secure connection such as, for example, the Secure Socket Layer protocol.
   After successful authentication of the e-pen and the secure processor based on public key pairs, the e-pen collects the hand signature data of the user, encrypts the data, and sends it to the secure processor for further processing and verification. For the details on security handshaking protocols and encrypted data transmission, refer to Chapter 9 "Security Handshaking Pitfalls", pp223 of "Network Security: Private Communication in a Public World" by C. Kaufman, R. Perlman and M. Speciner, PTR Prentice Hall, Englewood Criffs, New Jersey, 1995; and Chapter 10 "Using Algorithms" of "Applied Cryptography", 2^{nd} Edition, by Bruce Schneier, John Wiley & Sons, 1996.
**Protocol 2:** The same as protocol 1, except that the hand signature and/or feature measures of the hand signature are stored in the e-pen, and the processing and verification of the hand signature are conducted inside the e-pen. This is a "higher complexity e-pen" protocol. The e-pen can be used as a token in authentication of the e-pen user for various applications. There is no secure processor, and no independent secure memory.
**Protocol 3:** There are security authentication processes between the secure processor and a secure memory that may be, for example, a user authentication card. The user's identity information, including name, private key, hand signature data or features, is stored in the user authentication card. In this case, the e-pen can be used as pointing device only. The hand signature is captured, processed and verified in the secure processor.
**Protocol 4:** the same as protocol 3, except that the hand signature and/or feature measures are stored in the secure processor, either in its encrypted form, or in the secure memory.

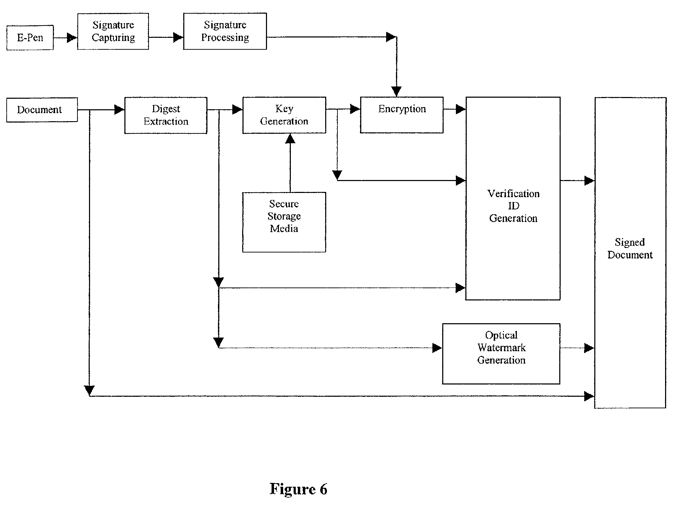

The method for the electronic signing of a document, in one form, is shown in Figure 6 and includes the steps:
1) prepare the document, and send it to a processor;
2) extract a digest, or representative features, from the document;
3) generate encryption/decryption keys based on the digest/features;
4) sign the document with the user's hand signature, capture the hand signature, and encrypt it with the keys;
5) generate a verification ID;
6) generate an optical watermark with embedded hand signature, time stamp and critical information of the document; and
7) compose the signed document package, which is the document, the hand signature data, the verification ID, and the optical watermark.

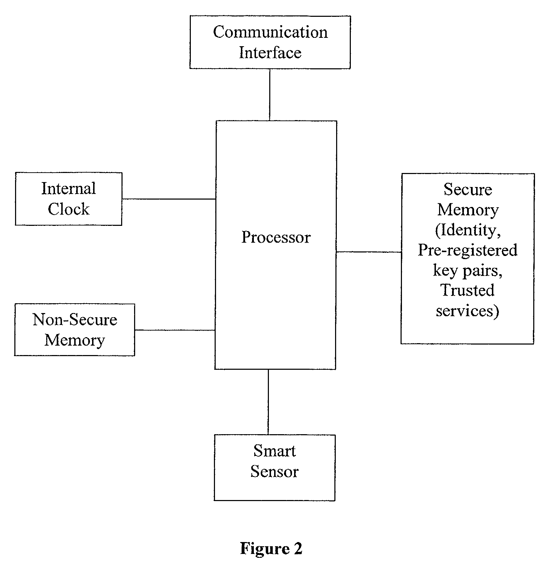

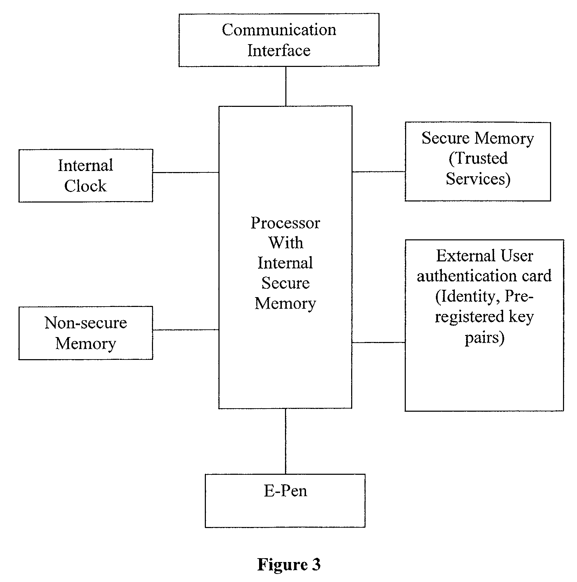

The system for electronically signing of document in this invention is as shown in Figures 2 and 3. It has a service program residing in the computer that communicates with outside parties. It may represent a user and communicate with a server. In this case, the service program can be a client software program that can communicate online with, and be controlled by, the server. The server coordinates all document processing, management, exchange, and approval amongst all other clients. The service program may also work as a mail client, by receiving a document to be processed and signed from a client sending the signed document to another client, and servicing the verification requests whenever, and from whomsoever, they arrive.

Either through client server architecture or a distributed architecture, the service program can play a global role in document processing, management and delivery, as well as providing the necessary infrastructure for security and authentication services. This includes, but is not limited to: registration of individual users and their e-pens; who is to sign documents; secure delivery of documents between users; maintaining the user and e-pen database; and so forth.

The e-pen is a secure hardware device. It may be used by its owner or any person authorized by the owner. Being hardware it can be identified by its ID number, and encryption key. Preferably, the encryption key is a private key and/or a digital certificate. Information regarding the identity of the owner is also preferably provided, in which case the encryption key may be the private key of the owner. The e-pen may be used in the way of a smart card.

The encryption/decryption keys may be embedded inside the e-pen by the manufacturer or a trusted third party. In such an arrangement, the encryption/decryption key pair acts as the identity of the e-pen. The encryption key is securely maintained within the e-pen, while the decryption key may be publicly released.

Alternatively, the encryption/decryption keys may be generated from the document digest. There are several ways to generate: encryption/decryption key pairs based on the document digest, the identity or public/private key pairs of the pen/secure memory/server, and/or the public/private key pairs of the user. For example, a group of public/private key pairs may be pre-generated and stored in the e-pen, or the secure memory or the server. When signing a document, the hash value of that document, or its digest, combined with the identity of the e-pen/secure memory/server (if desired), may be used to generate an index number. The e-pen/secure memory/server can then select a public/private key pair from that group of pre-generated key pairs in its secure memory using the index number to make the selection. Hand signature data, as well as other supporting information, can be hashed and encrypted using the selected private key. The e-pen/secure memory/server returns the encrypted hash value of the hand signature data to the service program. Since the public keys of the pre-generated key pairs are released and are indexed in the same way as they are indexed inside the e-pen/secure memory/server, the correct public key for decrypting the verification ID can be easily found using the document digest, which is readily computed from the document content.

The user may further encrypt the encrypted hash value of the hand signature data using their private key. This encryption step can provide supporting evidence to verify the identity of the user.

User authentication is through hand signature verification, or other means such as for example, a pin number, if necessary. The e-pen may include one or more sensors, processors, and related peripherals, to capture a handwritten signature and transform it to digital data. Critical features are then extracted from the data, encrypted, and stored for verification at the time of user registration.

An e-pen may not be owned by the user, and can be used by whoever is to sign a document. An example is the signing of the payment for a bill at a retailer's premises. In this case, the e-pen may be a pointing device, or a secure device for collecting signature data.

The e-pen may be manufactured and inspected by a trusted manufacturer to ensure that the program stored in the secure memory of the e-pen is tamper-proof, and to prevent run-time attacks on programs running in the processor of the e-pen. An e-pen may have a hardware unit that includes a smart sensor, an internal clock, a secure memory, and a secure processor.

When a document signing process is initiated, the service program in the computer communicates with the e-pen or the secure processor, and authenticates each other through a series of challenge and response processes. For the details on security handshaking protocols and encrypted data transmission, refer to Chapter 9 "Security Handshaking Pitfalls", p 223 in the book of "Network Security - private communication in a public world", by C. Kaufman, R. Perlman, and M. Speciner, PTR Prentice Hall, 1995.

After successful authentication of the e-pen/secure processor and the service program, the service program sends the document digest to the e-pen/secure processor. The e-pen/secure processor captures the hand signature, and processes it, if necessary. The verification ID is then generated by assembling the document digest, the hand signature digest or critical features, and the time stamp, and encrypts them using e-pen's private key. The verification ID can be easily verified with the public key of the e-pen, which is publicly available.

Alternatively, the encryption key can be derived from the digest of the document inside the e-pen/secure memory/server during the signing process. The verification ID, in such an instance, is generated by assembling the hand signature digest or critical features, and the time stamp, and encrypting them using the derived encryption key. The verification ID can be verified with the derived decryption key in the e-pen/secure memory/server, which is publicly available.

The service program may then communicate with trusted devices such as the secure memory and/or the server, to generate an optical watermark. The content embedded in the optical watermark may include critical information of the document content and the hand signature. As the hand signature also appears on the document, the optical watermark may serve as a means to protect against forgery by verifying the consistency between the embedded information and that appearing on the document.

The user can use any tools, and any method, to prepare the document. Before sending the document to the service program, the document must be in electronic form. Methods for transferring documents from the user to the signing device or program may vary. However, it is preferred that a secure document transfer channel is employed. This may be, for example, Secure Socket Layer protocol. The authentication of the identity of the sender and the signing device may be by use of a series of secure challenge and response procedures.

The signature capturing and processing modules may reside in the secure processor, the computer, or the e-pen. The technical aspects of capturing and processing can be found in "Progress in Automatic Signature Verification", edited by Rejean Plamondon, World Scientific, Singapore, 1994. The position, speed and pressure of the hand signature are captured and preprocessed for a feature vector, and sent for verification.

The signature data may be obtained from a hand signature acquisition device. The device encrypts the hash value of the digitalized signature at the time it is captured. The key used for encrypting the signature data may be either preset by the manufacturer or user, or given by the key generation device and/or program. The signature data may include information other than information related to the hand signature. For example, it may include other biometric data of the user, a time stamp, and the pressure applied to or by the pen during the signing process.

The signature data of a user, in one form, includes pre-registered hand signature data of the user, stored in the secure memory, the e-pen, or the server. The verification program can obtain the user's public key from a trusted third party (such as Certificate Authority), and decrypt the hand signature data using the public key of the user. Decrypted hand signature data can be used as a reference to verify the authenticity of the signature data appearing on the document. As a user's hand signature may change from time to time, the reference hand signature may need to be updated periodically.

The document digest may be generated in one or more of several methods. One is to generate a hash from the document file. Other method includes extracting important contents of the document. For example, a digest of a cheque may include the name of the payee, the amount of the cheque and its currency, the signing date, and any given withdrawal policy. For example, the "or bearer" can be crossed out; the cheque can also be crossed, and may be marked as being for the account of the payee only. The digest may be represented in plain text form, or other encoded form.

The representative features may include important graphic features of the document image. For example, the representative features of a face image in a photograph can be the Eigen value of that photograph, and the representative features of a text document may be given as the layout and the shape of its component.

An optical watermark may be added to the document to provide authentication of the document, and to protect the document from copying and/or forgery. The content embedded in the optical watermark may include one or more of: critical information of the document content, the hand signature image, and the verification ID.

The device or program for document printing may include functionalities that print the document with the signature and optical watermark in a controlled manner. Printing control schemes may apply to control the number of authorized copies of the document. The device for document printing is preferably, though not necessarily, a trusted device. It may be in accordance with our European Patent Application entitled "Remote Printing of Secure and/or Authenticated Documents" filed on the same day as this application.

The device or program for security management may include a database that stores:
1) the secure information of the user;
2) functions for encrypting and decrypting input data using a given or pre-registered key; and
3) functions for authenticating the identity of other devices through a series of challenge and response processes.

The encryption and decryption system preferably uses a Public Key Infrastructure that provides security and privacy for the signing process.

To verify a hand signature applied to an electronic document may include:
1) receiving the document in electronic form;
2) extracting a digest, or representative features, from the document;
3) extracting the hand signature data from the document;
4) extracting the digest data and any other embedded, hidden information from the optical watermark;
5) generating the decryption keys;
6) decrypting the hash value of the hand signature data from the verification ID;
7) verifying the document content by comparing the extracted document digest and hand signature with the digest data and hand signature in the optical watermark;
8) verifying the integrity of the hand signature data as applied to the document by comparing the hash value of the hand signature data extracted from the verification ID with the hash value of the explicit hand signature data applied to the document; and
9) verifying the originality and validity of the hand signature by decrypting the signature data.

The verification service may not be a trusted service. After receiving the document, the content in the optical watermark may be extracted by using an optical decoder, or by using a computer-aided decode program. This may be performed manually or automatically. The verification service then creates a document digest and its hash, and decrypts the verification ID in the document.

The decryption key may be obtained publicly if the verification ID is encrypted using the private key of the e-pen or the secure processor, or the user, during the signing process. The decryption key may also be generated according to the digest/features. The hash value of the document digest is used to form the session index number of the encryption/decryption key pairs in the signing process. The decryption key may be obtained from the pre-registered key pairs table by reference to the session index number.

The originality of the document content may be verified by the verification process by comparing the decrypted document digest with the digest data generated from the received document.

The authenticity of the signature may be verified by comparing the decrypted signature data with the signature data appearing on the received document.

The verification program can also check the validity of the time stamp, and other supporting information, that may be embedded in the encrypted hand signature data.

The method for verifying a signature as applied to a printed or hard copy document, may include:
1) receiving the document in printed form;
2) extracting signature data, time stamp and digest data from the optical watermark by using "keys"; and
3) verifying the originality of the document content and signature by comparing the extracted document digest, time stamp and hand signature with digest data and hand signature attached to the document in the optical watermark.

The receiver may receive the document in printed form. A digital imaging apparatus may be applied to transform the hard copy of the document to electronic form.

The document digest and signature data may be extracted from the optical watermark either manually or automatically. For example, an optical decoder may be used, allowing the receiver to read the contents of the optical watermark and manually inputting it into the processor.

The integrity of the hand signature data applied to the document may be verified by comparing the hand signature data decoded from the optical watermark with the hand signature appearing on the document.

The receiver may also authenticate the originality of the received document by verifying the document digest embedded in the optical watermark.

An alternative method for verifying a signature as applied to a printed on hardcopy document, may include:
1) receiving the document in printed form;
2) digitalizing the printed document into an electronic form;
3) extracting the digest, or representative features, from the digitalized document;
4) extracting the signature data from the digitalized document;
5) extracting the digest data from the optical watermark;
6) generating decryption keys;
7) decrypting the hash value of the hand signature data from the verification ID;
8) verifying the originality of the document content by comparing the extracted document digest and hand signature with the digest data, time stamp and hand signature in the optical watermark;
9) verifying the integrity of the signature data applied to the document by comparing the hash value of the hand signature data extracted from the verification ID with the hash value of the hand signature data attached to the document; and
10) verifying the originality and validity of the hand signature by decrypting the signature data.

This scheme is very similar to the verification protocol for an electronic document except for a number of points of difference. The first of these is that a digital imaging apparatus may be used to transform the hard copy document to electronic form. Secondly, the verification process extracts the digest, or representative features, from the digitalized document in a way that is relatively immune to errors during the printout and scan-in processing. This can be done either manually or automatically. For example, if the document digest is the important document content in plain text form, it can be re-generated in the verification process by manual input, or by a computer aided recognition algorithm, such as, for example, Optical Character Recognition. Furthermore, when the document digest is the representative feature of the document, a feature can be selected to represent the document, which feature is immune to variation or error during the print-and-scan processes.

A secure user authentication device such as, for example, a smart card may be attached to the processor to allow offline verification. It may also provide other personal information. These signatures can be integrated into the verification ID, if necessary, and the verification program can extract them and compare them with the hand signature appearing on the signed document.

The secure memory may be a user authentication card, if desired. Generally, it is hard to implement complex operations within a user authentication card. Therefore, the secure processor is preferably employed to communicate with the user authentication card. The user authentication card may have an internal clock, a secure memory, and an internal secure processor.

When the service program requests authentication of a document, it communicates with the secure processor and they authenticate each other through a series of challenges and responses. The document is sent to the secure processor. The secure processor then launches a series of secure services to generate a document digest and session key pairs. The session key pairs may be generated from the combination of document digest and the public key in the user authentication card.

The secure processor then obtains the hand signature data, and its hash, from the e-pen, as encrypted by a previously set session key. A secure service then decrypts the signature data, combines it with a time stamp and pre-registered signature in explicit form, and encrypts it again with a privately generated session key, or the private key of the user or the authentication card.

The encrypted signature may be used to form the verification ID. A trusted service can then create an optical watermark embedded with content that includes the document digest and the hand signature.

The captured hand signature may be verified by the signing device. After successful hand signature verification the hand signature, together with a digital signature, can be attached to a document to complete the document signing process.

Verification methods such as, for example, dynamic programming and neural networks can be used to match the input vector against the stored templates.

An aspect of the present invention is to obtain the private key of the e-pen owner, to store it in the e-pen, and to capture and process the hand signature for the feature measures to be stored in the e-pen, or other secure storage. Here, the method for the capture and processing of the hand signature is preferably the same as in the verification phase.

Since the hand signature may change over time, the stored template should be updated regularly to avoid false rejection during correct, normal operation.

As can be seen, the present invention relates to the signing and verifying process of an authenticated document that may have been transmitted over a network. This will reduce costly and slow physical delivery of the authenticated paper document. However, the authenticated document may also be transmitted through traditional means.

By the use of the present invention, one may obtain higher security than that of traditional methods, and other e-pen approaches such as, for example, pen-op and IBM. By providing other information such as, for example, pressure and a time sequence, that are not obtained in other methods, the hand signature will have higher user confidence than in the past.

It may also protect the integrity of hand signature applied to the document, which previous methods cannot, as well as using a sensor to substantially effectively block record and replay attacks. Such attacks are normally fatal to previous e-pen systems. As such, the present invention, preferably in combination with a smart card, may offer a convenient method for offline verification.

It may be applied in all scenarios when a traditional paper-to-paper signature is needed such as, for example, an electronic cheque. Banks may have smart cards used by its customers as an "electronic cheque book". The smart card stores pre-registered session IDs in such the same way as paper chequebooks are used. Customers may complete its content, sign it, and send it to a recipient. After the signing process, the pre-registered cheque ID will be destroyed. Another is an electronic credit card that stores the number of the user's actual credit card, and combines it with two signatures. Also, it may use it to sign contracts, distribute certifications, or send mail with the hand signature of the sender.

## Claims

1. A method for a person to sign a hard copy or digital document by use of a signature sensing device, including the steps of:
(a) capturing a capturable signature of the person using the sensing device;
(b) generating a verification ID; **characterized in that**
(c) to the document is attached the capturable signature and the verification ID and an optical watermark to complete the document signing process.

2. A method as claimed in claim 1, **characterised in that** the identity of the person is verified before generating the verification ID, the verification ID being generated from one or more of the group consisting of: the captured signature, a document digest, a time stamp, and representative features of the document.

3. A method as claimed in claim 1 or claim 2, **characterised in that** the captured signature is embedded into the optical watermark.

4. A method as claimed in claim 3, **characterised in that** one or more selected from the group consisting of: the document digest and a time stamp, is embedded into the optical watermark to form a link between the document and the signature; the document digest being critical information of the document.

5. A method as claimed in any one of claims 1 to 4, **characterised in that** the person's identity is verified by a public key infrastructure after a security handshaking challenge-and-response session between a server and the sensing device; the sensing device storing one or more selected from the group consisting of: an identity number of the sensing device, a private key of the sensing device, a private key of the person, measured features of the person's signature, and a detachable learning module.

6. A method as claimed in claim 5, **characterised in that** there is a plurality of persons able to use the sensing device, the sensing device being able to store registration information of each such person.

7. A method as claimed in claim 5 or claim 6, **characterised in that** the server and sensing device store their private keys respectively, and the signature and/or measured features of the signature of the person are stored in the server; there being included a preliminary step of security handshaking between the server and the sensing device based on public key pairs.

8. A method as claimed in any one of claims 5 to 7, **characterised in that** the signature and/or measured features of the signature of the person are stored in the sensing device, and the processing and verification of the signature are also carried out in the sensing device.

9. A method as claimed in any one of claims 5 to 8, **characterised in that** there is a security authentication process between the server and the sensing device, as well as between the server and a service program; after successful completion of the security handshaking, the sensing device collects signature data, encrypts the signature data, and sends it to the server for further processing and verification.

10. A method as claimed in claim 9, **characterised in that** the capturing and processing of the signature and/or measured features of the signature of the person are carried out in a secure processor, the processing result being sent to the sensing device for verification.

11. A method as claimed in any one of claims 5 to 10, **characterised in that** the private key and the signature of the person are stored in the sensing device.

12. A method as claimed in claim 10, **characterised in that** the signature and/or the measured features of the signature of the person are stored in the secure processor.

13. A method of claim 10, **characterised in that** the signature and/or the measured features of the signature are stored in the server.

14. A method as claimed in any one of claims 5 to 13, **characterised in that** the signature and/or the measured features of the signature of the person are stored in an encrypted form.

15. A method as claimed in any one of claims 5 to 14, **characterised in that** the signature and/or the measured features of the signature of the person are stored in a secure memory.

16. A method as claimed in claim 15, **characterised in that** the secure memory is an authentication card for the person.

17. A method as claimed in any one of claims 9 to 14, further including a document-handling module in the computer for displaying the document and incorporating the signature into the document.

18. A method as claimed in any one of claims 1 to 17, further including at least one seal image in the sensing device so that upon signing the document both the signature of the person and the at least one seal image will appear on the document.

19. A method as claimed in claim 18, **characterised in that** the at least one seal image is an optical watermark in which is embedded hidden information to protect against forgeries.

20. A method of any one of claims 1 to 19, **characterised in that** the method is applied to process approval.

21. A method for generating a validated capturable signature to a document including the steps of:
(a) signing the document using a signature sensing device;
(b) creating a digest of the document;
(c) encrypting the signature within the sensing device;
(d) generating a verification ID; and
(e) incorporating the verification ID into the document, and integrating the digest into the document.

22. A method as claimed in claim 21, **characterised in that** the verification ID is generated from one or more of the group consisting of: the captured signature, the document digest, a time stamp, and representative features of the document, the signature being embedded into an optical watermark.

23. A method as claimed in claim 22, **characterised in that** at least one of the document digest, critical features of the document contents, and a time stamp, are embedded into the optical watermark to form a link between the document and the signature, the document being authenticated by creating a digest of the signed document; generating a decrypt key using the document digest and using it to decrypt the verification ID; comparing the signature extracted from the verification ID and the signature as it appears on the signed document; and comparing the digest generated from the document and the digest from the verification ID.

24. A method as claimed in claim 23, **characterised in that** there is included the additional steps of comparing the signature on the document with that embedded in the optical watermark; and comparing that of the critical features/content of the document and time stamp embedded in the optical watermark with its equivalent in the document.

25. A method as claimed in any one of claims 21 to 24, **characterised in that** the digest of the document is obtained from the representative features of the document, that which is embedded in the optical watermark being decoded by a special key.

26. A method as claimed in any one of claims 21 to 25, **characterised in that** when the document is a printed document, the signature and the digest of the document are extracted from the printed document, the document authenticity being verified by comparing the signature on the document with the signature embedded in the optical watermark, and the critical features/content of the document and the time stamp embedded in the optical watermark are compared with their equivalents in the document.

27. A method as claimed in any one of claims 21 to 26, **characterised in that** the signature and the time stamp are encrypted using an encryption key generated from the digest of the document.

28. A method as claimed in claim 27, **characterised in that** the digest of the document is used to obtain an encryption key pair from a database of encryption key pairs.

29. A method as claimed in claim 27, **characterised in that** the document digest is used to generate and encryption key pair using a secret function.

30. A method as claimed in claim 28 and claim 29, **characterised in that** the database and the secret function are located in one of the group consisting of: the sensing device, a server, and a secure memory.

31. A method as claimed in any one of claims 1 to 30, **characterised in that** the signature includes signature image and features of a hand signature, the features of the hand signature including pressure and speed.

32. A method as claimed in any one of claims 1 to 31, **characterised in that** pre-registered signatures are stored for future use, the pre-registered signatures being stored in one or more selected from the group consisting of: the sensing device, the server, and the secure memory.

33. A method as claimed in claim 32, **characterised in that** the pre-registered signatures are periodically updated.

34. A method as claimed in any one of claims 1 to 33, **characterised in that** a hand signature is combined with other biometric information of the person.

35. A method as claimed in any one of claims 1 to 34, **characterised in that** encryption is by one or more selected from the group consisting of: public key pair and symmetry key.
